# EUROPEAN PATENT SPECIFICATION

(11) **EP 0 605 511 B1**
(45) Date of publication and mention of the grant of the patent: **28.02.1996**
(21) Application number: 92919696.2
(22) Date of filing: 30.09.1992
(51) Int. Cl.: B65G 1/04, B66F 9/07

(54) **DEVICE AND PROCESS FOR THE STORAGE OF PRODUCTS**
VORRICHTUNG UND VERFAHREN ZUM LAGERN VON PRODUKTEN
DISPOSITIF ET PROCEDE DE STOCKAGE DE PRODUITS

(30) Priority: 01.10.1991 US 769315; 09.03.1992 DE 9203104 U
(43) Date of publication of application: 13.07.1994
(73) Proprietor: D'HEYGERE, Philippe, B-8930 Menen (BE)
(72) Inventor: D'HEYGERE, Philippe, B-8930 Menen (BE)
(74) Representative: Powis de Tenbossche, Roland
(86) International application number: BE9200040
(87) International publication number: WO9307074

(56) References cited:
- DE-A- 2 241 213

## Description

The present invention relates to a device and a method for the storage of products placed on a support. The device according to the invention comprises :
- a frame comprising a number of vertically aligned carrying elements , said carrying elements being connected to a distance regulating mechanism regulating the distance between adjacent carrying elements and being adapted to receive support plates carrying loads of different heights,
- a support plate receiving and transfering platform being juxtapositioned to said storing frame and being vertically displaceable along said frame by a driving mechanism so as to position the platform for loading a support plate into said frame or for unloading a support plate from said frame,
- a sensor sensing the height of the load on the support plate to be stored, or the height of both the load and the support plate, and
- a control circuit comprising a switch which is actuated by the sensor so as to store the said support plate and load on a carrying element if the sensed vertical distance between adjacent carrying elements is greater than the sensed height.

The process comprises the following steps:
a load to be stored is placed on a support plate; said support plate is received on and transfered by a vertically displaceable platform juxtapositioned to said frame, the height of the load or the height of both the load and the support plate is sensed, the vertical distance between adjacent load carrying elements is modified in response to a sensed signal such that said distance corresponds substantially to the height of the support plate and the load.

### THE PRIOR ART

Products such as boxes, cans, papers, etc have up to now been stored in various manners.

For papers, or products having a low weight such as pharmaceutical vials, etc it is known to use a device comprising a plurality of plates separated from each other by a constant distance and linked by a pivot to a chain driven by a motor. The plates are also provided with an arm, the free end of which is provided with a roller guided in a rail, so as to ensure that the plates remain in a substantially horizontal plane.

For taking a product from a specific plate, all the plates have to be moved up to the moment when said specific plate is in front of a working table. This means that the power of the motor has to be over dimensioned so as to ensure the movement of the plates even if only a few adjacent plates are loaded with products.

The loss of place with such a device is important.

Due to the fact that the distance between two adjacent plates is limited, a direct accessibility, to the products placed on a plate is not possible. Therefore, boxes or containers containing the products to be stored have to be placed on the plate. For taking a product, a box has to be taken out from the plate. This means that the surface or the working table has at least to be substantially equal to the surface of the plate. The loss of place is due to the fact that the plates cannot move above or under the working table.

In such a machine the distance between two adjacent plates cannot be changed.

For products having heigher weight, it it known to place them on pallets and to displace such pallets by means of a fork-lift-truck. The movement of such a truck requires much place.

In order to save some place, it is known to use a multi level frame, a constant distance separating the level from each other.

Moreover, the user of such a truck is not able to be sure that the height of the pallet which has to be placed in a frame is lower than the distance separating two adjacent levels of the frame. If this would not be the case, an accident would occur. In order to prevent such accidents, the distance between the level will be higher than required, i.e. there will be a big loss of space.

A storage device comprising a frame comprising a number of carrying elements adapted to receive support plate carrying load is known from DE-A-2241213. Said known device comprises a support plate receiving and transfering platform.

Said device is not provided with any sensor sensing the height of the load on the support plate to be stored so that accident risk exists, as it is the case for the system using a truck as disclosed herebefore.

The present invention relates to a device for the storage of products in a frame and for the removal from the frame of products stored therein.

The device according to the invention requires a minimum floor space compared to prior art devices.

According to a preferred embodiment of the device, the frame consists of a first part for the storage of support plates and a second part for allowing movement of the platform. This first part comprises :
(a) at least two pairs of uprights,
(b) traverse beam placed between the uprights, and
(c) pairs of rails as carrying elements for the support plates, a first rail of a pair extending between two uprights.
   while the other rail of said pair extends between two other uprights in a direction which is substantially parallel to the direction in which the first rail extends.

The second part comprises vertical and traverse beams, two vertical beams being advantageously two uprights of the first part. According to a particularity of said embodiment, the rails of a pair extend in a substantially horizontal plane.

According to a particularity of the device the platform comprises:
(a) means for gripping a support plate from the frame;
(b) means for transferring a support plate from the platform to the frame;
(c) means for gripping a support plate from the working place, and
(d) means for transferring a support plate from the platform to the working place.

Advantageously, the means for gripping and transferring a support plate comprises at least one gear wheel driven by a motor, the teeth of said gear wheel being intended to work with a rack fixed on the support plate.

For example, the means for gripping and transferring a support plate comprises at least one gear wheel driven by a motor, the teeth of said gear wheel being intended to work with a rack fixed on the support plate, the power of the motor being fed by a circuit comprising a switch actuated by a sensor, said sensor when detecting the end of a gripping operation actuating the switch so that the motor no more drives the gear wheel.

According to an embodiment, the device further comprises a control means for actuating a relative movement between the carrying elements for the support plate to be stored and adjacent carrying elements, when the dimension measured by the sensor is greater than the distance separating the carrying elements for the support plate to be stored and adjacent carrying elements for another support plate, or for actuating at least a movement parallel to the carrying elements for the storage of a support plate when the dimension measured by the sensor is lower to the vertical distance separating the carrying elements for the support plate to be stored and the adjacent carrying elements for another support plate.

In said embodiment, the frame comprises a storing elevator comprising a number of carrying elements mounted in said frame in a concertina manner, said carrying elements being adapted to receive support plates carrying loads of different heights, adjacent carrying elements of the storing elevator being connected by a distance regulating mechanism regulating the distance between adjacent carrying elements in accordance with a sensed height of a load or load together with the support plate. The support plate receiving and transfering platform is juxtapositioned to said storing elevator and is displaceable along said elevator by a driving mechanism so as to position the platform for loading a support plate into said storing elevator or for unloading a support plate from said storing elevator, while a control circuit receives the information of said sensor and initiates the displacement between adjacent carrying elements in response of the sensed height signal so that the vertical distance between said adjacent carrying elements corresponds substantially to the height of the support plate with load to be stored.

According to another particularity of a device according to the invention and especially of the embodiment thereof, the platform comprises a sensor actuating a switch mounted in the circuit for feeding power to the system for moving the platform, so as to move said platform up to a predetermined place. For example, the sensor opens the circuit so that power is no more fed to the system when the sensor detects a predetermined carrying element for one support plate. Preferably, for the removal of a support plate from the frame, the sensor opens the circuit when it detects the presence of a predetermined support plate, while for storing a support plate into said frame, the sensor opens the circuit when it detects no support plate on a predetermined carrying element.

The distance regulating mechanism between adjacent carrying elements is for example a jack fixed to the carrying elements for a support plate, while the rod of said jack is fixed to the carrying elements for the adjacent support plate.

The carrying elements are preferably rails, one rail being linked to an adjacent rail by means of two pairs of rods. For each pair of rods, one end of the rods are hinged to rails, while the other ends of the rods are hinged each together. The mechanism links at least one rod of a first pair to one rod of the second pair so that by modifying the distance between the hinged connection of the rods of a first pair and the hinged connection of the rods of the second pair, the mechanism modifies the distance between two adjacent rails.

Advantageously the rods of a first pair are linked together by a pivot, while the rods of the second pair are also linked together by a pivot.

Furthermore, such a mechanism comprises as a prefered embodiment:
(a) a bolt hinged to a rod of a first pair, and
(b) a screw fastened on the shaft of a motor hinged to a rod of the second pair, the screw being engaged into said bolt so that the rotation of the screw due to the motor modifies the distance separating the hinged connections and thus the distance separating two adjacent carrying elements.

When the device according to the invention, especially the embodiment thereof, is provided with a mechanism for modifying the distance between carrying elements for one support and adjacent carrying elements for another support plate, the sensor detecting the height of the load or the height of the support plate and load to be stored advantageously actuates the mechanism for modifying the vertical distance between the carrying elements on which the support plate has to be placed and adjacent carrying elements. In this way, said vertical distance corresponds substantially to said height so that the space of the frame is used in the most efficient manner by no loss of space. For example, in case of a vertical storing elevator in which support plates are placed in horizontal planes, the sensor will detect the height of the support plate and load or product to be stored and will actuates the mechanism, more specifically the motor, so that the distance in a vertical plane between the carrying elements on which the support plate has to be placed and the adjacent upper carrying elements corresponds substantially to said height.

According to a particularity of a device according to the invention, the system for moving the platform consists of two pairs of gears mounted each on a shaft bound to a plate fixed to a beam, a chain extending between the gears of each pair, one link of a part of the chain extending in a substantially vertical direction being bound to the platform to be moved. For each pair of gears, a motor drives a shaft so as to move the platform in a substantially vertical direction.

Such a chain comprises two parts namely a load chain strand and an empty chain strand, one of said strands passing through a guiding means located between an upper gear and a lower gear. Said guiding means consists for example a block or rod made of synthetic material and having a groove, the sides of which surround at least partly three sides of the chain. Such synthetic material may be reinforced by means of fibers, such as glass fibers, carbon fibers, aramide fibers.

The guiding means for the chain is advantageously secured to a plate, for example to a transverse plate between two adjacent legs of said plate.

Such a plate has thus a U-shaped cross-section in which the guiding means is inserted.

The chain is also advantageously associated to an element for controlling the chain tension ensuring that the chain is tightened. Such a system is for example a jack, the rod of which bears a shaft on which a gear is rotatively mounted, the chain passing on said gear. By moving the said rod, the tension of the chain may be modified or may be maintained substantially at a predetermined valve.

According to a further embodiment, the platform bears a sensor for detecting a height of the load or of the support plate with the load or product to be stored.

According to a further embodiment, the device comprises a control circuit for actuating a relative movement between adjacent carrying elements to ensure that, when transferring the support plate from the platform into the storing elevator guiding means, the vertical distance between said adjacent carrying elements is at least greater than the height of the load or of the support plate and load sensed by the sensor.

Preferably the device comprises a control circuit for actuating a relative movement between the carrying elements for one support plate and adjacent carrying elements for another support plate, so as to ensure that the distance between the carrying elements for one support plate and adjacent carrying elements substantially corresponds to the height of the said one support plate and load measured by the sensor and/or that, after removing one support plate from its carrying elements, the distance between the carrying elements for the said removed support plate and adjacent carrying elements corresponds to a minimum dimension, in particular to the dimension of a support plate without product or load.

A further object of the invention is a process for storing products by means of an embodiment of a device according to the invention.

Such a process is a process in which :
- a load to be stored is placed on a support plate ;
- the height of the load or the height of the load and support plate is sensed by a sensor ;
- the vertical distance between adjacent carrying elements is modified so that said distance corresponds substantially to the height of the support plate and load.

Other details of the invention will appear from the following description in which reference is made to the attached drawings.

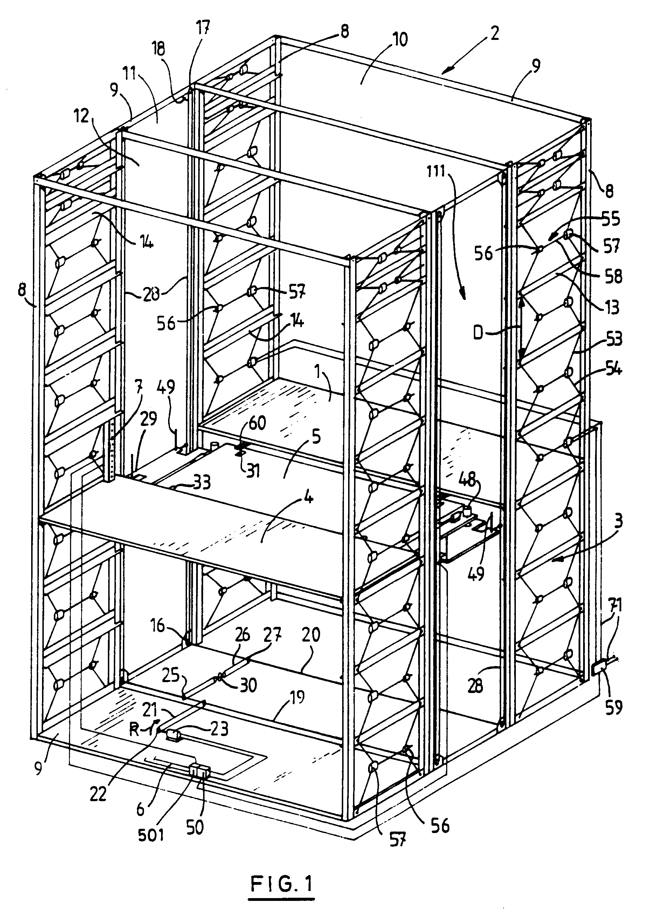

In said drawings, Figure 1 is a schematic view in perspective of an embodiment of a device according to the invention.
Figure 2 is a view of a detail of the device shown in figure 1.
Figure 3 is a partial view in cross section along the line III-III of the detail shown in figure 2.
Figure 4 to 6 are partial views of the detail shown in figure 2 during various steps for gripping or transferring a support plate.
Figure 7 is a partial view in cross section along the line VII-VII of the detail shown in figure 2 but during the transfer of the support plate.
Figure 8 is a view of another detail of the device shown in figure 1.
Figure 9 is a view of the detail shown in figure 8 during the movement of a carrying element with respect to another carrying element.
Figure 10 is a view in perspective of a detail of a device similar to that shown in figure 1.

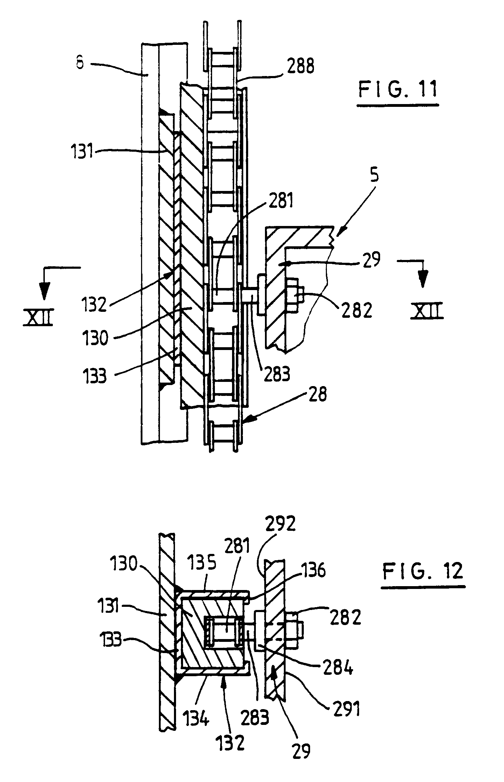

Figure 11 is a view in cross section along the line XI - XI of the detail shown in figure 10.
Figure 12 is a view in cross section along the line XII -XII of the detail shown in figure 11.
Figure 13 is a view similar to that of figure 1 of an embodiment of the device according to the invention.

In these figures, the same numerals refer to similar parts of the device.

Figure 1 shows a schematic view of an embodiment of a device according to the invention for the storage of products placed on support plates 1.

Said device, comprises:
(a) a frame 2 with a storing elevator provided with horizontal carrying elements 3 for carrying support plates 1 for the products or loads to be stored;
(b) a working table 4 on which a support plate 1 removed from the storing elevator, or to be stored into said storing elevator can be placed;
(c) a platform 5 for removing a support plate from the storing elevator, for bringing a support plate on the working table 4 and for storing a support plate into the storing elevator;
(d) a control circuit 6 for feeding power to a system 15 for moving the platform 5 in a vertical direction, and
(e) a sensor 7 for detecting the height of the support plate provided with the product or load to be stored.

The sensor 7 actuates a switch 501 mounted in the circuit 6 so as to allow the movement or displacement of a support plate 1 placed on the working table 4 when the height detected by the sensor 7 is lower to the distance D separating the carrying elements 3 on which the support plate 1 has to be placed and the adjacent upper carrying elements 3.
The frame 2 consists of eight uprights 8 linked together by traverse beams 9. In fact, the frame 2 is divided in three parts namely a first part 10 for the storage of support plates, a second part 11 for moving the platform and third part 12 for the storage of support plates, said third part 12 further comprising the working table 4.

Between the uprights 8 of the first 10 and third part 12, pair of rails 13, 14 are placed. The rails 13, 14 of one pair extend in a horizontal plane and are parallel the one to the other.

The vertical movement of the platform 5 is obtained by means of a driving mechanism with four chains which are linked to the corner of the platform of in the neighbourhood thereof. Said chains extend in the planes 111 of the side of the second part 11 which has the lower width.

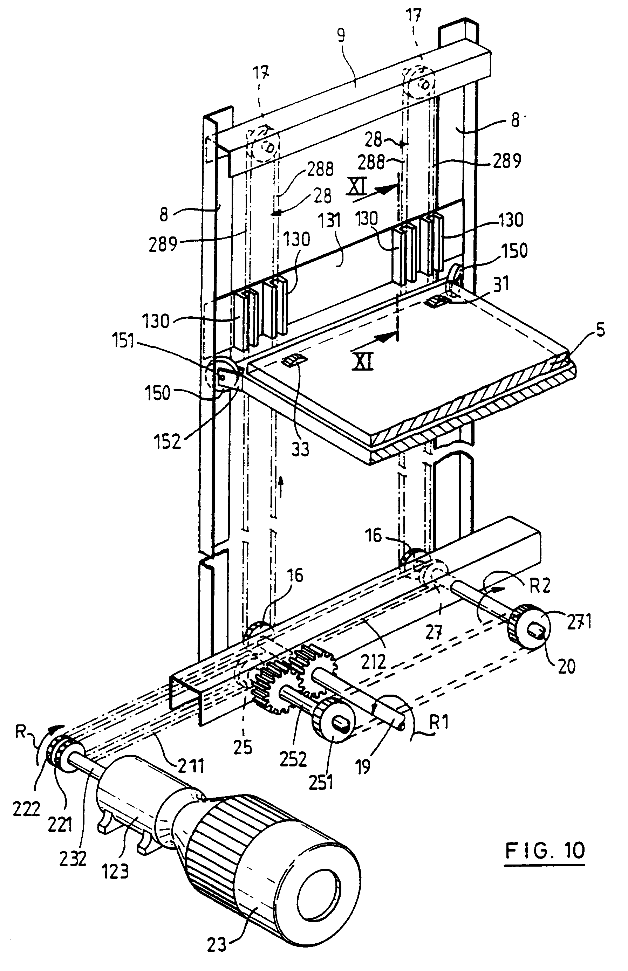

Parts of the driving mechanism or system are shown in figures 1 and 10.

The system 15 for moving the platform 5 between the uprights 8 of the second part 11 of the frame 2 comprises four pairs of gears 16, 17, the upper gears 17 being mounted on separate shafts attached to a plate 18 welded to the traverse beams 9, while for the lower gears 16, two first gears are mounted on a first shaft 19 and the two other gears are mounted on a second shaft 20. On the first shaft 13 two other gears 24, 25 are mounted, a first being intended to be linked by a chain 21 and a gear 22 to the shaft of a motor 23, while the second gear 25 being intended to be linked by chains 26 and a reverse gear box 30 to a further gear 27 mounted on the second shaft 20. A chain 28 extends between each pair of upper gear 17 - lower gear 16. The platform 5 has four arms 29, the ends of which are respectively bound to a link of a chain 28.

In this manner, due to the rotation R of the shaft of the motor 23, the platform 5 can be moved in a vertical direction. Since the arms of the platform 5 are linked to a part of a chain which is located in front of another part of a chain to which an arm 29 is linked, it is necessary to use between the gears 25 and 27 a reverse gear box 30.

Figure 10 shows a modification of the system of figure 1. For each pair of upper gear 17 and lower gear 16, a chain 28 extends between the said upper gear 17 and the said lower gear 16. Each chain is linked to the platform 5 in the neighbourhood of one of its corners. The link between a chain 28 and the platform consists of a pin 281 of the chain 28 and of a screw nut 282. The pin 281 is provided with an extension 283, the end of which is fully threaded. Said extension 283 is introduced into an opening 284 of a wall 291 of the arm 29 so that the free end of the extension 283 is adjacent to the side of the wall 291 opposite to the side of the wall adjacent to the chain 28. By securing the nut 282 on the thread of the pin, the chain 28 is linked to the platform 5. Advantageously the extension 283 bears a ring 284 intended to contact a side 292 of the wall 291 when screwing the nut on the pin.

The shaft 232 of the motor 23 bears two gears 221, 222,. By means of a chain 211, a gear 25 and of a reverse gear box 30, the motor 23 drives the shaft 19 on which gears 16 are mounted. When the shaft 232 of the motor rotates in a clockwise direction R, the shaft 19 rotates in a anticlockwise direction R1.

By means of a chain 212 which extends between the gear 222 of the shaft 232 and the gear 27 of the shaft 20, the motor 23 drives said shaft 20 and therefore the gears 16 which are mounted on said shaft 20. When the shaft 232 of the motor 23 rotates in a clockwise direction R, the shaft 20 also rotates in a clockwise direction R2.
Preferably, a chain 213 extends between a gear 251 mounted on the shaft 252 of the gear 25 and a gear 271 mounted on the shaft 20. Advantageously gears 221, 222, 251, 25, 27 and 271 are identical. Such a supplementary chain 213 provides a safety in case of breaking of chain 211 or chain 212. If the chain 211 is broken, the shaft 19 will still be driven by the motor 23 by means of chains 212 and 213, while if the chain 212 is broken, the shaft 20 will still be driven by the motor 23 by means of chains 211 and 213. By means of such a supplementary chain 213, it is possible to avoid a not suitable movement of the platform 5, such as a pivotment, which could lead to the destruction of other chains such as chain 28.

Between the gears 16 and 17 of each chain, there is at least one guiding means for the chain. Said guiding means 130 extend vertically from the neighbourhood of a gear 16 up to the neighbourhood of the upper gear 17. The guiding means are only partly shown in figure 10. Guiding means are preferably used for the load chain strand 288 as well for the empty chain strand 289, the load chain strand 288 being the part of the chain 28 extending between an upper gear and a lower gear and which is linked to the platform 5. The guiding means 130 are beared by a plate 131 which is secured to the uprights 8 for example by welding.

The guiding means 130 consists of a bar or rod or block with a longitudinal groove and is secured on the plate 131 by means of a clip or quick fastening system 132. Said quick fastening system 132 consists of a central plate 133 provided with two legs 134, 135 which are parallel. The free end of each leg 134, 135 is provided with a projection 136, the projection 136 of the leg 134 being directed toward the projection 136 of the leg 135. The guiding means is engaged in the space defined between the two parallel legs 134, 135 so as to secure it to the plate 131. The central plate of the quick fastening system is for example welded to the plate 131.

Such quick fastening systems are located between the upper gear 17 and the lower gear 16 so as to link the guiding means 130 of the chain 28 in several places between said gears 16, 17.

When pushing the guiding means 130 into the space defined by the two legs 134, 135, said legs are deformed so as to increase the distance between the free end of the other leg 135 and so as to ensure a fastening force of the legs on the guiding means.

The guiding means 130 has a groove, the opening of which is located on a side opposite to the side adjacent to the central plate 133 i.e. the opening is located between the free ends of the legs 134, 135. Said guiding means has a U-shaped cross section, wherein the chain is engaged.

The guiding means 130 surrounds advantageously three sides of the chain 28.

Advantageously, each chain 28 is provided with a system for controlling the tension thereof or for ensuring a minimum tension thereof.

In order to obtain a still better guiding of the platform 5, i.e. so as to ensure that the upper surface of the platform 5 still remains in a horizontal plane when the said platform 5 is moved in a vertical direction, the element 5 bears a rubber roller 150 at each of its corners. Said roller 150 is mounted on a shaft 151 beared by arm 152 of the platform 5. The roller 150 is intended to contact and to roll on a guideway formed by the groove or corner of the L-shaped upright 8.

The rollers 150 which are substantially cylindrical have a plane perpendicular to the axis of their shaft which extends into a direction forming an angle, for example of 45°, with adjacent edges of the platform 5. Such rollers facilitate the vertical movement of the platform 5 while avoiding undue lateral movement (horizontal movement) of the platform 5.

In an embodiment which is not shown each roller has a median symmetrical plane, the symmetrical plane of a first roller corresponding to the symmetrical plane of the roller located at the corner opposite to the corner where the said first roller.

The platform 5 comprises four gears wheels 31, 32, 33, 34 which act as means for gripping a support plate from the frame or from the working table and as means for transferring a support plate into the frame or to the working table.

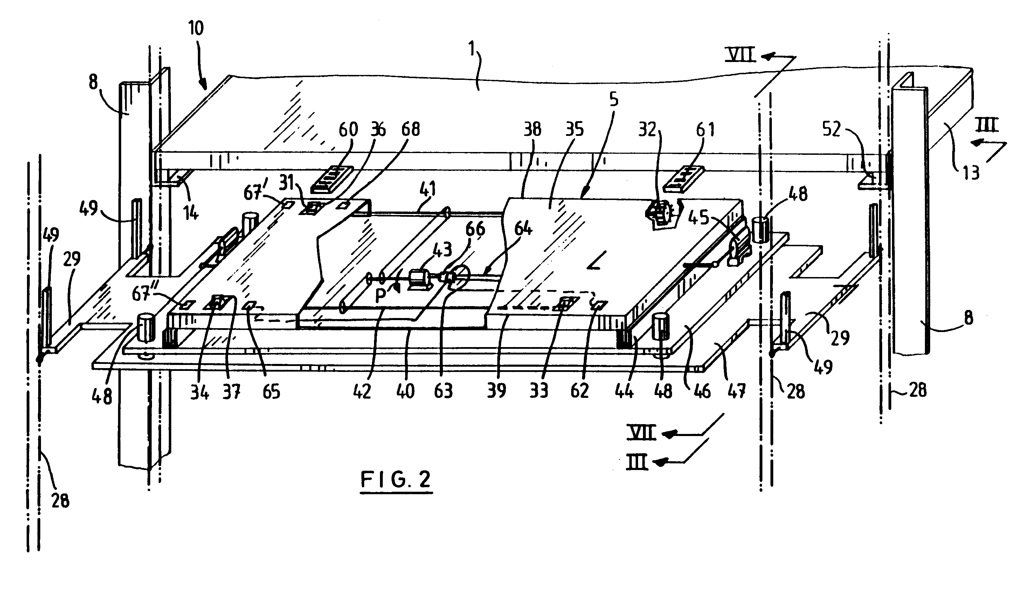

The platform 5 (see figure 2) comprises:
a first plate 35 having two pairs of openings 36, 37, the openings 36 of a first pair being located near a first edge 38 of the plate, while the openings 37 of the other pair are located near the edge 39 opposed to said first edge 38;
a second plate 40 attached to said first plate 35; four gear wheels 31, 32, 33, 34, a part of which extends through the openings 36, 37;
shafts 41, 42 on which the gear wheels 31, 32, 33, 34 are mounted, said shafts being driven by a motor 43 beared by the second plate;
a third plate 46 provided with guiding means 44 for the assembly first-second plates and bound to said assembly by a jack 45 so that said assembly can be moved in a substantially horizontal direction, and
a fourth plate 47 linked to the third plate 46 by four jacks 48 for displacing the third plate 46 in a substantially vertical direction.

Instead of using jacks other linking elements allowing linear movements between two parts may be used. Such elements is for example elements comprising guiding means for having a linear movement.

Each arm 29 of the platform 5 bears a sensor 49 actuating a switch 50 mounted in the circuit 6 for feeding power to the motor 23 so as to move said platform 5 up to a predetermined position, for example up to the moment that the platform 5 is in front of carrying elements on which a support plate is placed or has to be placed.

In fact, for the removal of a support plate from the storing elevator the sensor 49 opens the circuit 6 when it detects carrying elements on which stays the support plate to be removed, while for storing a support plate into said storing elevator, the sensor 49 opens the circuit 6 when it detects carrying elements on which no support stays.

The carrying elements 13 are constituted by L beam provided with a layer 52 of Ertalon ® or another product intended to facilitate the sliding of the support plate 1. The L beams can slide in U beams forming the uprights 8. A first L-beam 13 is connected to an adjacent L-beam 13 by a system for modifying the distance D between said L-beams 13. The connection of said two L-beams is made by means of two pairs of rods 53, 54. One end of the rods of a pair is hinged to a L-beam 13 or rail, while the other ends of said rods are hinged together. The mechanism 55 for modifying the distance D between two L-beams consists of a bolt 56 attached to the hinge of a first pair of rods and of a motor 57 attached to the hinge of the second pair of rods, the shaft of said motor bearing a screw 58 engaged into the bolt 56. By actuating the motor 57, the screw 58 rotates so that the distance between the L-beams 13 is modified. The length of the rods 53, 54 is lower to the half of the length of the rail or L-beam 13. A similar mechanism 55 links two adjacent L-beams 14.

Advantageously the sensor 7 actuates a switch 59 mounted in the circuit 71 for feeding power to said motor. When said sensor 7 detects that the height of the support plate provided with a product or load to be stored is higher than the distance D separating the rails 13, 14 on which the support plate 1 has to be placed and the rails 13, 14 located just above, the switch 59 is actuated so that the motor 57 drives the screw 58, i.e. so as to modify the distance D.

Preferably the sensor 7 actuates said switch 59 so that said distance D substantially corresponds to the height of the support 1 plates and loads to be stored, i.e. the distance D is diminished or increased respectively when the height is lower to the initial distance or greater than said initial distance D.

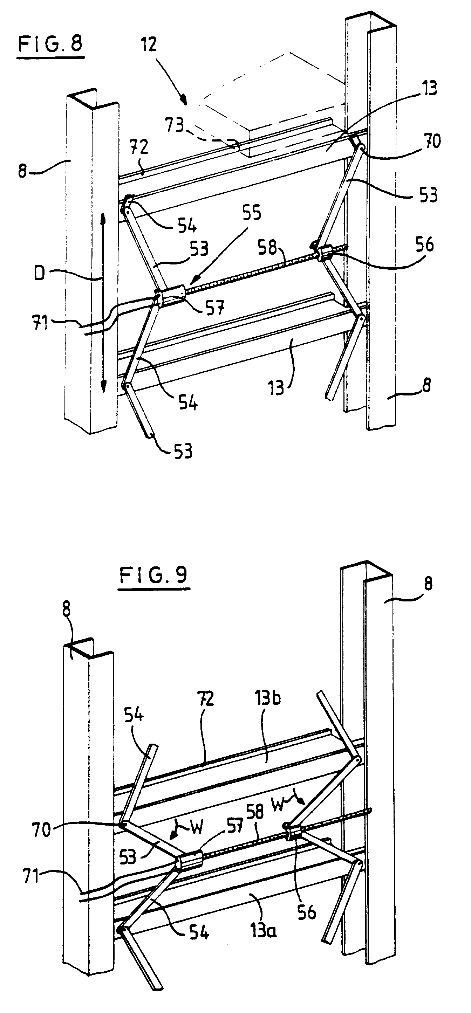

For example when the distance D is higher than the height of the support plate provided with the product to be stored, the upper rail 13b is moved towards the lower rail 13a so that the distance D corresponds to said height (see Figure 9).

For moving the upper rail 13b towards the lower rail 13a, the motor 57 is driven so that the bolt 56 moves towards the motor 57 and so that the rods 53, 54 rotate around their hinge 70 (arrow W). The power is fed to the motor 57 by a circuit such as an electrical circuit 71 in which the switch 59 actuated by the sensor 7 is mounted. In a similar manner, upper rail 14 is moved towards lower rail 14.

As shown in Figures 8 and 9, rails are advantageously provided with a longitudinal protuberance 72, while the support plate 1 has advantageously a groove 73. When the plate 1 is placed on the rails 13, the protuberance 72 is engaged into said groove 73 so as to ensure the correct position of the support 1 on the rails.
The device according to the invention is advantageously connected to a computer for a good working of the various steps for the storage or removal of a support plate 1.

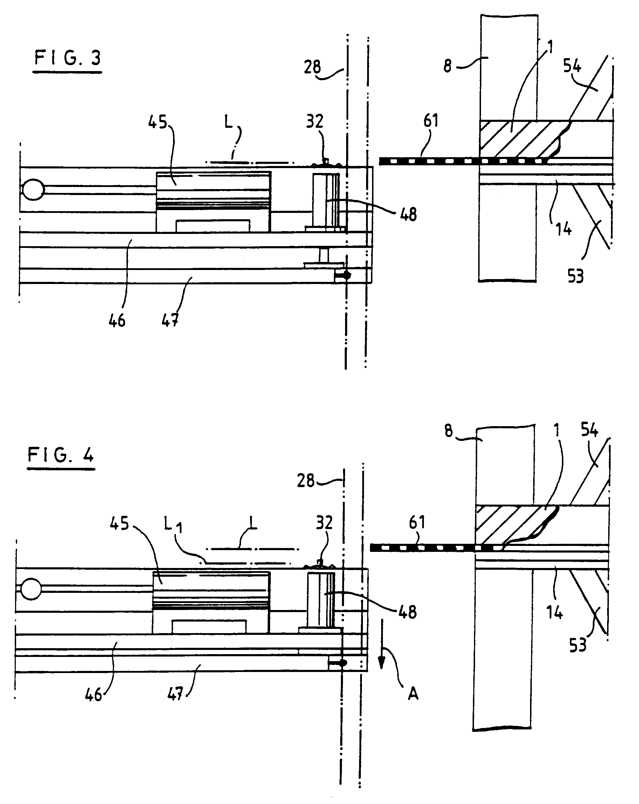

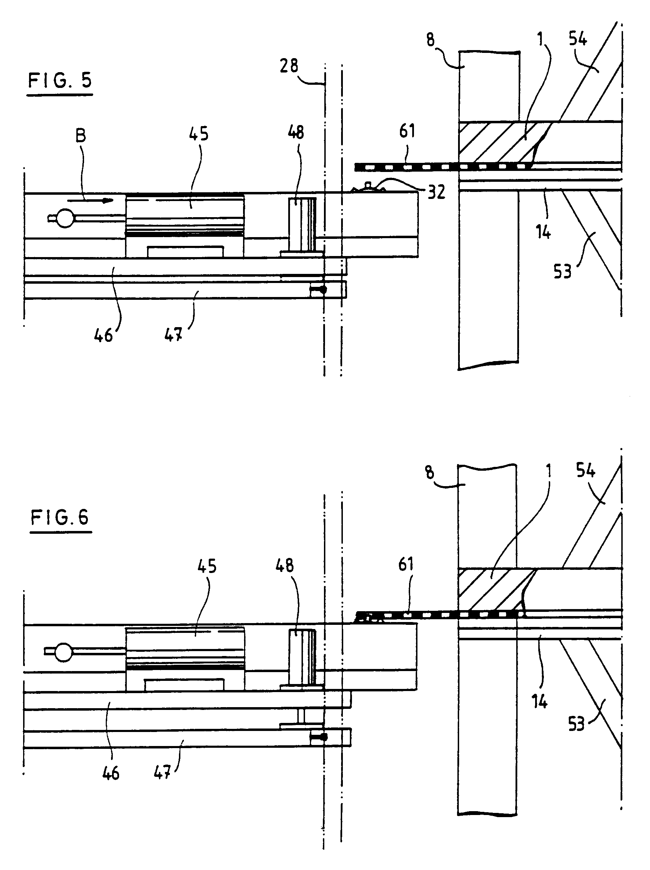

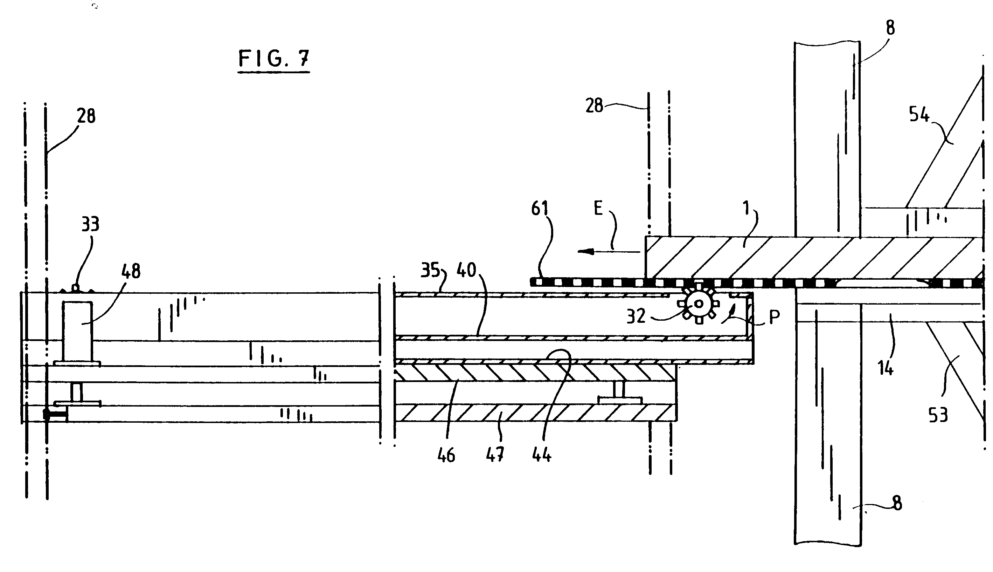

The working of the device according to the invention will be described hereafter.
1. For the removal of a plate 1 from the frame 2.
   The platform 5 is moved by the chain 28 driven by the motor 23 up to the moment when the sensor 49 detects carrying elements 13 on which the support plate 1 to be removed stays.
   When such a detection is made by the sensor 49, the switch 50 is actuated so as to stop the motor 23.
   At this moment the upper part of the gear wheels 31, 32, 33, 34 are substantially at a level L corresponding to the horizontal plane wherein racks 60, 61 attached to the support plate 1 extend.
   In order to transfer the support plate 1 into the platform 5, the following steps are necessary in the embodiment shown in the attached figures.
   The jacks 48 are actuated so as to move the third plate 46 in the direction of the fourth plate 47 i.e. so that the upper part of the gear wheels 31, 32, 33, 34 are at a level L₁ under the level corresponding to the horizontal plane L wherein the racks 60, 61 extend (arrow A in figure 4).
   The jack 45 is then actuated so as to slide the first and second plates and thus the gear wheels 31, 32, 33, 34 with respect to the third plate 46. In this manner the gears are located under the racks 60, 61 (arrow B in figure 5)
   By actuating the jacks 48, the third plate 46 is spaced from the fourth plate 47 (arrow C in figure 6) so that teeth of the gear wheels are engaged into openings of the racks 60, 61.
   The motor 43 is then actuated (rotation of the shaft: arrow P in figure 2) so as to move the support plate 1 on to the platform 5 (arrow E in figure 7)
   At the end of the gripping operation of a support plate from the storing elevator, sensor 62 when detecting the plate 1 actuates a switch 63 mounted in the circuit 64 for feeding power to the motor 43 so as to stop the rotation of the shaft of said motor 43 i.e. to stop the rotation of the gear wheels 31, 32, 33, 34.
   The jack 45 is finally actuated so as to move back the first and second plates 35, 40 in their initial position with respect to the fourth plate 47.
   The motor 23 then drives the chains 28 so as to move the platform 5 in front of the working table 4.
   When the element 5 is in front of said working table 4, the motor 43 drives the gear wheels 31, 32, 33, 34 so as to move the support plate 1 in the direction of the working table. At the end of the transfer operation, a sensor 65 no more detects the presence of the support plate 1 and actuates a switch 66 so as to stop the motor 43 and the jack 45 so as to displace the first and the second plates of the element towards the working table 4.
   Thereafter the third plate 46 is moved towards the fourth plate 47 (due to the action of the jacks 48) so that theet of gear wheels are no more engaged into openings of the racks 60, 61 the first and second plates 35, 40 are moved back to their initial position (due to the jack 45) and finally the jacks 48 space the third plate 46 with respect to the fourth plate 47 so that the platform 5 is in its initial position.
   The platform 5 is also provided with sensors 671, 672 for detecting the end of a gripping operation of a support from the working table 4 and for detecting the end of a transfer operation of a support plate 1 into the storing elevator. There are two sensors for detecting the end of the transfer of a support plate 1 into the storing elevator, a first 671 is intended to detect the end of the transfer of a support plate in part 10 of the storing elevator while the other 672 is intended to detect the end of the transfer of a support plate in part 12 of the storing elevator.
2. For the storage of a support plate into the storing elevator, various working steps of the device are given hereafter.
   - A support plate 1 is placed on the working table 4.
   - the gear wheels 33, 34 transfer the support plate onto the platform.
   - The sensor 7 detects the height of the support plate 1 and product to be stored.
   - If the support plate has to be placed on carrying elements for which the distance between said carrying elements and adjacent upper carrying elements cannot be modified, the sensor 7 actuates a switch 8 so as to open the circuit 6, i.e. so as to avoid the displacement of the platform 5.
   - If the distance between the carrying elements 13 on which the support plate has to be placed and the adjacent upper carrying elements can be modified by a mechanism 55, the sensor 7 actuates said mechanism so as to adapt said distance to the maximum heigth detected by the sensor i.e. so as to minimize the loss of space.
   - When the distance between the carrying elements on which the support plate has to be placed and the adjacent upper carrying elements is greater than the maximum heigth of the support plate and product to be stored, the platform 5 is moved in part 11 of the frame up to the moment when the platform 5 is in front of the carrying elements on which the support plate has to be placed and the support plate 1 is transferred by gear wheels into the frame 2.

When using a device according to the invention for storing a product in the storing elevator, the said product is placed on a support plate 1. The dimensions of the support plate 1 and product to be stored are detected by the sensor 7 and compared with a distance separating the rails 13, 14 on which the support plate 1 has to be placed and adjacent rails 13, 14. When the dimension is lower to the distance, the switch 501 is activated so as to move the platform 5 for the storage of the support plate 1 in the storing elevator. When the dimension of the support plate 1 and product to be stored or of the product to be stored are greater than the distance separating in a vertical direction adjacent rails, the mechanism 55 is actuated so as to modify or change the distance in a vertical direction between the pairs of rails, so that the support plate and the product can be moved onto the said rails of the storing elevator.

This situation is detected by a comparator and as soon as the distance between adjacent rails is great enough the switch 501 is activated or actuated so as to move the platform 5 in front of the rails on which the platform has to be placed.

It is obvious that many modifications of the device according to the invention are possible.

For example instead moving the support plate in front of the sensor 7 so as to determine the height of the support plate and product to be stored, it is possible to move the sensor 7 along an edge of the working table 4 so as to determine said height.

Instead of determining the height, it is possible to determine whether or not the height of the support plate-product to be stored is higher than a maximum value. Such a device is advantageously used when the distance between adjacent carrying elements is constant.

In order to ensure that the platform 5 will substantially remains in a horizontal plane, the arms 29 can be provided with rollers rolling on rails.

Instead of using jacks for moving plates of the platform 5 therebetween it is possible to use other mechanical systems such system using racks and pinions.

When using a computer controlling the movement of the platform 5, the movement of the platform 5 can be decelerated when the platform 5 is in the neighborhood of the working table 4 or of carrying elements 13, 14 on which the support plate has to be placed or on which the support plate to be removed stays.

As sensors 7, 62, 65, 66, 49 it is possible to use photoelectric cells.

Obviously, walls may be attached to the uprights 8, so as to form a closed box having only one opening near the working table.

Instead of placing sensors 49 on the arms 29 of the platform 5, said sensors may be attached to the carrying elements 13.

When using a computer for controlling the use of the device, the platform 5 is advantageously moved from the bottom to the top of the second part 11 of the frame 2 so as to memorize in the computer the position of the various carrying elements or rails 13, 14.

The device as shown in figure 1 can be considered as one module of an unity for the storage of product. The height of an embodiment of a device according to the invention was 7 meters.

The device may be provided with a door so as to close the working table, with means for ensuring air conditioning in the device,...

When using air conditioning, for example in order to ensure a low temperature in the device, the platform 5 may be placed into a box with doors so as to allow the transfer of a support or the upper carrying elements adjacent to the carrying elements on which the support plate to be removed stays is provided with a door. Still another possibility is that the support is a box in which the product to be stored is placed.

By using a device according to the invention, device provided with a mechanism for modifying the distance between two adjacent rails, it is possible to optimize the storage in volume i.e. to use in the most efficient manner a predetermined volume for the storage of product.

The device according to the invention allows also a quick removal of the desired product from the storing elevator, especially in view of the time required for such a removal when using a device according to the prior art.

The device according to the invention has among others the following characteristics and advantages.

By using a device according to the invention provided with the mechanism for modifying the distance between two adjacent rails, it is possible to optimize the volume of storage, i.e. in order to have the most efficient manner to use the device, the device takes into account the volumes of the products to be stored or to the products to be stored.

With the system according to the invention it is possible to have a quick removal of the desired product from the frame in comparison with the time which was required for removing products from the known device.

The storage device according to the invention is modular so that in function of the requirement the number of modules which have to be connected each together can be optimize.

Another advantage of a device according to the invention is that a computer can be used for the control of the device. The device in relation to its control can be used with a constant and predetermined number of support plates for products or with a number which can be increased. In this latter case, it is advantageous to have a few supports outside of the device.

The computer or control means for the control of the device can also allow the identification of the products stored, so that the technical effort for the control can be reduced or maintaned at a low level. A connection can also exist between the computer of the device and the process computer of the factory so as to transfer information from the one to the other for example in order to limit the memory or/and calculating capacity of the computer of the device.

It is also possible to use several computers of different modules or devices. With appropriate software program or routine for the optimization of the use the device can be used, so that the space for storing in the storage module can be used in the most efficient manner as possible and/or in order to limit the power consumption and/or with a greater speed or ability for the storage or removal of products. In an embodiment with the highest automatization, the worker or user has only to control a control board and to give instruction to the computer, preferably an interactive computer in order to store or remove a specific product. The control means or computer selects for example the spacial requirement and/or the power consumption of the motors and/or the way of working the instructions for obtaining the better speed.

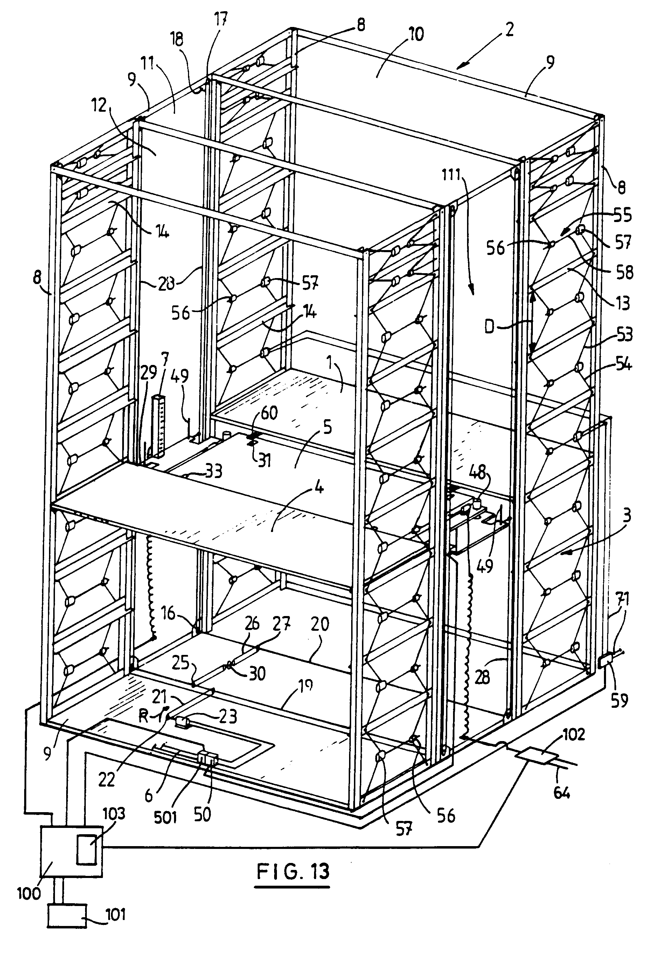

A device provided with such a control means or computer is shown in figure 13. The device is similar to that shown in figure 1 except that the sensor 7 is beared by the platform 5 and that the device is provided with a computer.

The sensor 7 detects the height of the support 1 and products to be stored and sends a signal to the control means or computer 100. Said computer 100 is connected to a control board 101 intended to be actuated by a controller and to switches 501, 59 for moving the platform 5 or for increasing or lowering the distance separating adjacent rails 13, 14.

When the computer receives the signal from the sensor 7, it compares said signal with the maximum height of the support plate - product which can be stored or which can still be stored. If said signal (height of the support - product to be stored) is greater than said maximum height, the computer sends an error message to the controlboard. If said signal is lower to said maximum height, the computer selects the rails on which the support will be placed, for example in relation of the weight of the product to be stored and/or of the rails which are still free, and actuates switches 501 and 59 so as to move the platform 5 in front of the rails and so as to adjust the distance D between the rails 13, 14 on which the support plate - product has to be stored and the adjacent upper rails 13, 14. As soon as this movement of the platform 5 and this adjustement of the rails are achieved, the computer 100 actuates a switch 102 so as to allow to supply power to the platform 5 for the transfer of the support plate on the rails.

The computer comprises also a memory 103 so as to know the rails which are used, the kind of products stored for each rail, ... Therefore, the controller has only to type on the controlboard the product he want to remove from the frame 2, since the computer will immediately select the movement of the platform 5 so as to put said platform 5 in front of the support plate - product to be removed.

The computer is also advantageously provided with a software or program intended to modify the location of one support plate with respect to another. For example, a support plate with a product having a high weight located in the upper part of the device will be removed and placed on the working table 4. Then the platform 5 will move in front of a support plate with a product having a lower weight located in the lower part of the device so as to transfer it on the platform 5. After moving the platform 5 up to the upper part of the device the support plate and product with the lower weight are transfered so as to take the place of the support plate and product with the higher weight, these latter being thereafter by means of the platform 5 placed on the rails of the former support plate and product with the lower weight.

The transverse beams 9 or plates 131 extending between uprights 8 can be used so as to form a safety ladder for the maintenance or reparing works at any place of the device.

By using a supplementary chain 213 as shown in figure 10, said chain 213 extending between the shafts 19 and 20, a better working or synchronization of the shafts 19 and 20 can be ensured, so that the platform 5 can be moved in a very precise manner.

By adjusting the rollers 150 (see figure 10) with respect to the platform 5, it is possible to adjust the position of the platform 5 with respect to the uprights 8.

The motor 23 is advantageously linked to a braking system 123 (see figure 10) which automatically brakes when the motor 23 is no more driven.

In the here above description the wording support plate 1 means among others any flat shaped elements such as metal plates, pallets, grates or an open worked plate.

## Claims

1. A storage device for the storage of products placed on support plates into a frame, said device comprising :
- a frame (2) comprising a number of vertically aligned carrying elements (3), said carrying elements (3) being connected to a distance regulating mechanism (55) regulating the distance (D) between adjacent carrying elements and being adapted to receive support plates (1) carrying loads of different heights,
- a support plate receiving and transfering platform (5) being juxtapositioned to said frame and being vertically displaceable along said frame by a driving mechanism so as to position said platform for loading a support plate (1) into said frame or for unloading a support plate (1) from said frame,
- a sensor (7) sensing the height of the load on the support plate (1) to be stored, or the height of both the load and the support plate (1), and
- a control circuit (100) comprising a switch which is actuated by said sensor so as to store the said support plate (1) and load on a carrying element (3) if the sensed vertical distance between adjacent carrying elements is greater than the sensed height.

2. The storage device of claim 1 characterized in that the frame comprises a storing elevator comprising a number of carrying elements (3) mounted in said frame (2) in a concertina manner, in that the support plate receiving and transfering platform (5) is juxtapositioned to said storing elevator and is displaceable along said elevator by a driving mechanism so as to position the platform for loading a support plate (1) into said storing elevator or for unloading a support plate (1) from said storing elevator, and
in that said control circuit (100) receives the information of said sensor (7) and initiates the displacement between adjacent carrying elements (3) in response of the sensed height signal so that the vertical distance (D) between said adjacent carrying elements (3) corresponds substantially to the height of the support plate with load to be stored.

3. Device according to claim 2, characterized in that the carrying elements are rails (13), one rail being linked to an adjacent rail by means of two pairs of rods (53,54); for each pairs of rods, the one ends of the rods are hinged to rails, while the other ends of the rods are hinged each together, one rod of said pair of rods being linked to one rod of the second pair by said distance regulating mechanism (55) for modifying the distance between the hinged connection of the rods of a first pair and the hinged connection of the rods of the second pair.

4. Device according to claim 1, characterized in that the distance regulating mechanism (55) comprises a bolt (56) hinged to a rod of a first pair and a screw gearing (58) fixed on the shaft of a motor (57) hinged to a rod of the second pair, the screw engaging an opening of the bolt, such that upon rotation of the screw the distance between the hinged connections and that between two adjacent carrying elements is modified.

5. Device according to claim 4, characterized in that the rods of a pair are linked together by a pivot.

6. Device according to claim 2, characterized in that it comprises means for sensing the weight of the support plate and of the load to be stored, and in that the control circuit (100) comprises a memory for the carrying elements used for carrying said support plates, and means for actuating the platform (5) so as to modify the location into the storing elevator of one support plate with respect to another in response of the weight of said support plates (1) and their load.

7. Device according to anyone of the claims 1 to 6, characterized in that the platform (5) is moved by means of a system (15) comprising a chain (28) linked to the platform (5) and guiding means (130) of the chain (28) consisting of a block made of synthetic material surrounding three sides of the chain (28).

8. Device according to anyone of the claims 1 to 6, characterized in that the platform (5) bears the sensor (7).

9. Device according to anyone of the claims 2 to 6, characterized in that the control circuit actuates the mechanism (55) connecting adjacent carrying elements (3) in response of the removal of a support plate (1) for modifying the vertical distance (D) between the said adjacent carrying elements (3) so that said vertical distance (D) corresponds to a minimum predetermined dimension.

10. Process for storing loads placed on support plates (1) into a frame of a storing device comprising a number of vertically aligned load carrying elements (3), in which :
- a load to be stored is placed on a support plate (1)
- said support plate is received on and tranfered by a a vertically displaceable platform (5) juxtapositioned to said frame,
- the height of the load or the height of both the load and the support plate (1) is sensed,
- the vertical distance (D) between adjacent carrying elements (3) is modified in response to a sensed signal such that said distance (D) corresponds substantially to the height of the support plate (1) and the load.

11. Process according to claim 10, in which
- a support plate (1) with a load is removed from the storing elevator ;
- the vertical distance (D) between adjacent carrying elements (3) is modified so that said distance corresponds substantially to a minimum distance.

12. Process according to claim 10, in which
- the weight of a support plate and load to be stored is sensed ;
- the carrying elements (3) on which the support plate has to be stored is selected such that support plates with a load of higher weight are located at the lower part of the storing elevator and support plates with a load of lower weight are located at the upper part of the storing elevator.

## Patentansprüche

1. Eine Lagervorrichtung für das Lagern von Produkten, die auf Trägerplatten in einem Rahmen einzuordnen sind, wobei die Vorrichtung aufweist:
- einen Rahmen (2) mit einer Anzahl von vertikal ausgerichteten Trägerelementen (3), wobei die Trägerelemente (3) mit einem Distanz-Reguliermechanismus (55) verbunden sind, der den Abstand (D) zwischen benachbarten Trägerelementen reguliert und dafür ausgelegt sind, Trägerplatten (1) aufzunehmen, welche Lasten mit unterschiedlichen Höhen tragen,
- eine Aufnahme- und Übertragungsplattform (5) für die Trägerplatten, welche unmittelbar benachbart dem Rahmen angeordnet ist und vertikal entlang des Rahmens durch einen Antriebsmechanismus bewegbar ist, um die Plattform zum Einladen einer Trägerplatte (1) in den Rahmen oder zum Entladen einer Trägerplatte (1) aus dem Rahmen zu positionieren,
- einen Sensor (7), der die Höhe der Last auf der einzulagernden Trägerplatte (1) oder die Höhe von sowohl der Last plus der Trägerplatte (1) erfaßt, und
- einen Steuerschaltkreis (100) mit einem Schalter, der von dem Sensor betätigt wird, um die Trägerplatte (1) und die Last auf einem Trägerelement (3) einzuladen, wenn der erfaßte vertikale Abstand zwischen benachbarten Trägerelementen größer als die erfaßte Höhe ist.

2. Lagervorrichtung nach Anspruch 1, dadurch gekennzeichnet,
daß der Rahmen einen Lagerlift mit einer Anzahl von Trägerelementen (3) aufweist, die zieharmonikaartig in dem Rahmen (2) angeordnet sind;
daß die Plattform (5) zum Aufnehmen und Übertragen der Trägerplatte dem Lagerlift unmittelbar benachbart ist und entlang des Liftes durch einen Antriebsmechanismus so bewegbar ist, daß die Plattform zum Einladen einer Trägerplatte (1) in den Lagerlift oder zum Entladen einer Trägerplatte (1) aus dem Lagerlift positionierbar ist; und
daß der Steuerschaltkreis (100) die Information des Sensors (7) empfängt und die Verschiebung einander benachbarten Trägerelementen (3) in Antwort auf das erfaßte Höhensignal so veranlaßt, das der vertikale Abstand (D) zwischen einander benachbarten Trägerelementen (3) im wesentlichen der Höhe der einzulagernden Trägerplatte mit der Last darauf entspricht.

3. Vorrichtung nach Anspruch 2, dadurch gekennzeichnet, daß die Trägerelemente Schienen (13) sind, wobei eine Schiene mit einer benachbarten Schiene mittels zweier Paare von Lenkern (53, 54) verbunden ist, wobei für jedes Lenkerpaar die einen Enden der Lenker an den Schienen angelenkt sind, wohingegen die anderen Enden der Lenker mitinander verbunden sind, ein Lenker aus dem Lenkerpaar mit einem Lenker des zweiten Paares über den Distanz-Reguliermechanismus (55) zur Veränderung des Abstandes zwischen der Schwenkverbindung der Lenker eines ersten Paares und der Schwenkverbindung der Lenker des zweiten Paares verbunden ist.

4. Vorrichtung nach Anspruch 1, dadurch gekennzeichnet, daß der Distanz-Reguliermechanismus (55) eine Mutter (56), die an einem Lenker eines ersten Paares angreift und ein Schraubengetriebe (58) an der Abtriebswelle eines Motors (57) aufweist, der an einem Lenker des zweiten Paares angeordnet ist, wobei die Schraube in Eingriff mit der Gewindeöffnung der Mutter derart ist, daß bei Drehung der Schraube der Abstand zwischen den Schwenkverbindungen und derjenige zwischen zwei benachbarten Trägerelementen verändert wird.

5. Vorrichtung nach Anspruch 4, dadurch gekennzeichnet, daß die Lenker eines Paares untereinander durch ein Schwenklager verbunden sind.

6. Vorrichtung nach Anspruch 2, dadurch gekennzeichnet, daß sie Vorrichtungen zum Erfassen des Gewichtes der einzulagernden Trägerplatte und von der Last aufweist, wobei der Steuerschaltkreis (100) einen Speicher für die Trägerelemente aufweist, die zur Aufnahme der Trägerplatten verwendet werden, sowie Einrichtungen zur Betätigung der Plattform (5) derart, daß die Stellung einer Trägerplatte in dem Lagerlift gegenüber einer anderen in Antwort auf das Gewicht der Trägerplatten (1) und ihrer Last geändert wird.

7. Vorrichtung nach einem der Ansprüche 1 bis 6, dadurch gekennzeichnet, daß die Plattform (5) mittels eines Systems (15) bewegt wird, das eine Kette (28), die an der Plattform (5) angeschlagen ist, sowie eine Führungsvorrichtung (130) für die Kette (28) aufweist, die aus einem Block aus einem synthetischen Material besteht, der drei Seiten der Kette (28) einfaßt.

8. Vorrichtung nach einen der Ansprüche 1 bis 6, dadurch gekennzeichnet, daß die Plattform (5) den Sensor (7) trägt.

9. Vorrichtung nach einem der Ansprüche 2 bis 6, dadurch gekennzeichnet, daß der Steuerschaltkreis in Antwort auf das Entfernen einer Trägerplatte (1) den Mechanismus (55) betätigt, der einander benachbarte Trägerelemente (3) verbindet, um den vertikalen Abstand (D) zwischen den benachbarten Trägerelementen (3) so zu verändern, daß der vertikale Abstand (D) einer minimalen vorherbestimmten Größe entspricht.

10. Prozess zur Lagerung von Lasten, die auf Trägerplanten (1) angeordnet sind, in einem Rahmen einer Lagervorrichtung mit einer Anzahl von vertikal ausgerichteten lasttragenden Elementen (3), wobei:
- eine einzulagernde Last auf einer Trägerplatte (1) angeordnet wird,
- die Trägerplatte auf einer vertikal verschiebbaren Plattform (5) angeordnet und von dieser in unmittelbare Nachbarschaft des Rahmens übertragen wird,
- die Höhe der Last oder die Höhe von sowohl Last als auch Trägerplatte (1) erfaßt wird,
- der vertikale Abstand (D) zwischen benachbarten Trägerelementen (3) in Antwort auf ein erfaßtes Signal so verändert wird, daß der Abstand (D) im wesentlichen der Höhe
der Trägerplatte (1) mit der Last entspricht.

11. Prozess nach Anspruch 10, bei dem
- eine Trägerplatte (1) mit einer Last aus dem Lagerlift entfernt wird;
- der vertikale Abstand (D) zwischen einander benachbarten Trägerelementen (3) so verändert wird, daß der Abstand im wesentlichen einem minimalen Abstand entspricht.

12. Prozess nach Anspruch 10, bei dem
- das Gewicht einer einzulagernden Trägerplatte mit der Last erfaßt wird;
- die Trägerelemente (3), auf welchen die Trägerplatte einzulagern ist, so ausgewählt werden, daß Trägerplatten mit einer Last höheren Gewichtes im unteren Teil des Lagerliftes angeordnet werden und Trägerplatten mit einer Last geringeren Gewichtes im oberen Teil des Lagerliftes angeordnet werden.

## Revendications

1. Dispositif d'entreposage pour l'entreposage de produits placés sur des plateaux de soutien dans un cadre, ledit dispositif comportant :
- un cadre (2) comportant plusieurs éléments de support (3) alignés verticalement, lesdits éléments de support (3) étant reliés à un mécanisme (55) de régulation de distance, régulant la distance (D) entre des éléments de support contigus et étant adaptés pour recevoir des plateaux de soutien (1) transportant des charges de hauteurs différentes,
- un plateau de soutien recevant et transportant une plate-forme (5), juxtaposé audit cadre et pouvant être déplacé verticalement le long dudit cadre par un mécanisme d'entraînement de manière à positionner ladite plate-forme pour le chargement d'un plateau de soutien (1) dans ledit cadre ou pour le déchargement d'un plateau de soutien (1) dudit cadre,
- un détecteur (7) détectant la hauteur de la charge placée sur le plateau de soutien (1) et à entreposer, ou la hauteur totale de la charge et du plateau de soutien (1), et
- un circuit de commande (100) comportant un commutateur qui est actionné par ledit détecteur de manière à entreposer ledit plateau de soutien (1) et la charge sur un élément de support (3) si la distance verticale détectée entre des éléments de support contigus est supérieure à la hauteur détectée.

2. Dispositif d'entreposage selon la revendication 1, caractérisé en ce que le cadre comprend un élévateur d'entreposage comportant plusieurs éléments de support (3) montés dans ledit cadre (2) à la manière d'un accordéon, en ce que la plate-forme (5) recevant et transportant le plateau de soutien est juxtaposée sur ledit élévateur d'entreposage et peut être déplacée le long dudit élévateur par un mécanisme d'entraînement de manière à positionner la plate-forme pour le chargement d'un plateau de soutien (1) dans ledit élévateur d'entreposage ou pour le déchargement d'un plateau de soutien (1) hors dudit élévateur d'entreposage, et
en ce que ledit circuit de commande (100) reçoit l'information dudit détecteur (7) et lance le déplacement entre des éléments de support (3) contigus en réponse au signal d'une hauteur détectée, de telle sorte que la distance verticale (D) entre lesdits éléments de support (3) contigus corresponde essentiellement à la hauteur du plateau de soutien avec une charge à entreposer.

3. Dispositif selon la revendication 2, caractérisé en ce que les éléments de support sont des rails (13), un rail étant lié à un rail contigu au moyen de deux paires de barres (53,54); pour chaque paire de barres, une des extrémités des barres est articulée sur les rails, tandis que les autres extrémités des rails sont articulées l'une avec l'autre, une barre de ladite paire de barres étant liée à une barre de la seconde paire par ledit mécanisme (55) de régulation de distance, pour modifier la distance entre la liaison articulée des barres d'une première paire et la liaison articulée des barres de la seconde paire.

4. Dispositif selon la revendication 1, caractérisé en ce que le mécanisme (55) de régulation de distance comporte un boulon (56) articulé sur une barre d'une première paire et une tige filetée (58) fixée sur l'arbre d'un moteur (57) articulé sur une barre de la seconde paire, la tige filetée s'engageant dans une ouverture du boulon de telle sorte que lors d'une rotation de la tige filetée, la distance entre les liaisons articulées et celle entre deux éléments de support soit modifiée.

5. Dispositif selon la revendication 4, caractérisé en ce que les barres d'une paire sont reliées ensemble par un pivot.

6. Dispositif selon la revendication 2, caractérisé en ce qu'il comporte un moyen pour détecter le poids du plateau de soutien et de la charge à entreposer, et en ce que le circuit de commande (100) comporte une mémoire pour les éléments de support utilisés pour transporter lesdits plateaux de soutien, et un moyen pour actionner la plate-forme (5) de manière à modifier l'emplacement dans l'élévateur d'entreposage d'un plateau de soutien par rapport à un autre en réponse au poids desdits plateaux de soutien (1) et de leur charge.

7. Dispositif selon l'une quelconque des revendications 1 à 6, caractérisé en ce que la plate-forme (5) est déplacée au moyen d'un système (15) comportant une chaîne (28) reliée à la plate-forme (5) et un moyen de guidage (130) de la chaîne (28), constitué d'un bloc réalisé en matériau synthétique entourant trois côtés de la chaîne (28).

8. Dispositif selon l'une quelconque des revendications 1 à 6, caractérisé en ce que la plate-forme (5) porte les détecteurs (7).

9. Dispositif selon l'une quelconque des revendications 2 à 6, caractérisé en ce que le circuit de commande actionne le mécanisme (55) reliant les éléments de support (3) contigus en réponse à l'enlèvement d'un plateau de soutien (1), pour modifier la distance verticale (D) entre lesdits éléments de support (3) contigus de telle sorte que ladite distance verticale (D) corresponde à une dimension minimale prédéterminée.

10. Procédé pour entreposer des charges placées sur des plateaux de soutien (1) dans un cadre d'un dispositif d' entreposage comportant plusieurs éléments de support (3) d'une charge alignés verticalement, dans lequel :
- une charge à entreposer est placée sur un plateau de soutien (1),
- ledit plateau de soutien est reçu et transporté sur une plate-forme (5) pouvant être déplacée verticalement et juxtaposée sur ledit cadre,
- la hauteur de la charge ou la hauteur totale de la charge et du plateau de soutien (1) est détectée,
- la distance verticale (D) entre les éléments de support (3) contigus est modifiée en réponse à un signal détecté, de telle sorte que ladite distance (D) corresponde essentiellement à la hauteur du plateau de soutien (1) et de la charge.

11. Procédé selon la revendication 10, dans lequel
- un plateau de soutien (1) avec une charge est enlevé de l'élévateur d'entreposage ;
- la distance verticale (D) entre les éléments de support (3) contigus est modifiée de telle sorte que ladite distance corresponde essentiellement à une distance minimale.

12. Procédé selon la revendication 10, dans lequel
- le poids d'un plateau de support et d'une charge à entreposer est détecté ;
- l'élément de support (3) sur lequel le plateau de soutien doit être entreposé est sélectionné de telle sorte que les plateaux de soutien comportant une charge de poids plus élevé sont situés dans la partie inférieure de l'élévateur d'entreposage, et que des plateaux de soutien comportant une charge de poids plus bas sont situés dans la partie supérieure de l'élévateur d'entreposage.
